# EUROPÄISCHE PATENTSCHRIFT

(11) **EP 2 048 406 B1**
(45) Veröffentlichungstag und Bekanntmachung des Hinweises auf die Patenterteilung: **24.01.2018**
(21) Anmeldenummer: 08017712.4
(22) Anmeldetag: 09.10.2008
(51) Int. Cl.: F16D 69/02, D21H 13/00, F16D 69/00, D21H 17/33

(54) **Verfahren zur Herstellung eines Reibbelages**
Method for manufacturing a friction lining
Procédé de fabrication d'une garniture de friction

(30) Priorität: 10.10.2007 AT 16092007
(43) Veröffentlichungstag der Anmeldung: 15.04.2009
(73) Patentinhaber: Miba Frictec GmbH, 4663 Laakirchen (AT)
(72) Erfinder: Eder, Manuel, 4841 Timelkam (AT); Hartner, Gerhard, 4654 Bad Wimsbach (AT)
(74) Vertreter: Ofner, Clemens

(56) Entgegenhaltungen:
- EP-A- 0 892 896
- WO-A-01/88055
- DE-A1- 2 041 987
- GB-A- 905 054
- GB-A- 1 102 246
- US-A- 4 118 528
- US-A- 4 780 141
- US-A- 5 472 995
- US-A1- 2005 266 758
- DAFENG Z ET AL: "Surface behavior of aminosulfonate formaldehyde condensates and its dispersion effect on cement paste", May 2008 (2008-05), JOURNAL OF DISPERSION SCIENCE AND TECHNOLOGY MAY 2008 TAYLOR AND FRANCIS INC. US LNKD- DOI:10.1080/01932690701757972, VOL. 29, NR. 5, PAGE(S) 653 - 659

## Beschreibung

Die Erfindung betrifft die Verwendung eines anionisch wirkenden Naphthalinsulfonsäure-Kondensationsproduktes als Schutzkolloid zur Herstellung eines Reibbelages, einen Reibbelag, insbesondere einen Nasslaufreibbelag, umfassend zumindest ein Reibpapier mit Fasern, die mit zumindest einem Elastomer gebunden sind, sowie eine Reibbaugruppe, insbesondere eine Motorradkupplung, umfassend einen Reibbelag auf einem Träger und eine Gegenlamelle, die mit dem Reibbelag zusammenwirkt.

Für bestimmte Anwendung in der Reibmetallindustrie, wie z.B. Motorradkupplungen oder bei verschleißempfindlichen Anwendungen die Gegenlamellen aus Leichtmetall oder Leichtmetalllegierungen verwenden, werden Reibbeläge mit höherer Elastizität eingesetzt, als dies für Reibbeläge anderer Anwendungen üblich ist. Der Grund dafür liegt in der verschleißempfindlichen Gegenlamelle, da diese aus Leichtmetall oder Leichtmetalllegierungen gebildet ist mit einer entsprechenden Gewichtsreduktion, welche von der Fahrzeugindustrie gefordert wird, verbunden ist. Zusätzlich ist mit der Gewichtsreduktion direkt an der Kupplung vor allem bei kleineren Motoren eine Leistungssteigerung möglich.

Für die Herstellung derartiger Reibpapiere mit höherer Elastizität werden heute vorwiegend pulverförmige Latices eingesetzt. Es besteht dabei jedoch das Problem, dass diese als Platzhalter lose zwischen den Fasen des Reibpapieres angeordnet sind und keine ausreichende Verbindung zwischen den einzelnen Bestandteilen besteht.

Probleme bestehen auch bei der ökonomischen Herstellung von Reibbelägen mit hohen Latexgehalten, beispielsweise auf einer Papiermaschine, da beim Einsatz von größeren Mengen an Latex dieser nicht mehr stabil gehalten werden kann und eine gezielt gesteuerte Ausfällung des Latex auf der Faseroberfläche bzw. in der Fasermatrix nicht mehr stattfindet. Bei der unkontrollierten Ausfällung des Latex interagiert dieser nicht mehr mit den Bestandteilen des Reibpapiers, sondern bevorzugt mit den Oberflächen der Papiermaschine. D.h. es bilden sich bereits nach kurzer Produktionszeit große Mengen an Latexablagerungen auf Büttenwänden, Rührern und in Rohren. Diese Probleme treten ab einem Latexgehalt von oberhalb 20 % auf. Es wird damit die Produktion durch zuwachsende und verstopfende Rohre unmöglich. Die Papiermaschine verklebt regelrecht und wird unsteuerbar. Zusätzlich kommt es gelegentlich zu Ablösungen dieser Latexablagerungen, die sich dann im Papier als Fehlerstelle bzw. Unregelmäßigkeiten niederschlagen.

Bisherige Versuche dieses Problem durch den Einsatz von Dispergiermitteln zu lösen scheiterten, da die Ablagerungstendenz des Latex nicht oder nur ungenügend verbessert werden konnte. Da diese Dispergiermittel auf Tensidbasis beruhen und somit grenzflächenaktiv sind, erniedrigen sie die Oberflächenspannung von wässrigen Lösungen, wodurch sie ein zusätzliches und nicht unerhebliches Schaumproblem generieren.

Latexgebundene bzw. -enthaltende Reibbeläge sind bereits im Stand der Technik dargelegt. So beschreibt z.B. die JP 2000-213578 A eine Kupplung für den Nassbetrieb, bestehend aus einem ringförmigen Kernelement aus einer Platte aus Stahl oder einer Aluminiumlegierung, welche mit einem Reibmaterial auf beiden Seiten belegt ist. Dieses Nassreibmaterial wird durch Imprägnierung eines Papierbasismaterials mit einem wärmehärtbaren Harz hergestellt. Das Papierbasismaterial wird aus normalem Papier mit Fasern organischer oder anorganischer Natur, einem Füllstoff und Latex hergestellt. Der Latexgehalt im Papierbasismaterial liegt dabei im Bereich zwischen 0,4 Gew.-% und 25 Gew.-%.

Die JP 60-139933 A beschreibt ein Reibelement für Bremsen oder Kupplungen eines Kraftfahrzeuges oder eines Motorrads. Das Reibelement ist aus Papier hergestellt, welches zwischen 1 und 30 Gew.-% Gummilatex aufweist. Bevorzugt wird ein NBR- oder SBR-Latex verwendet. Es wird damit dem Reibelement eine entsprechende Elastizität verliehen und kann der Reibkoeffizient von dünnem Papier verbessert werden. Ebenso wird damit die Abriebbeständigkeit erhöht.

Die US 5,472,995 A beschreibt ein asbestfreies, faserverstärktes Material für die Verwendung in der Herstellung von Dichtungen oder dergleichen, umfassend ein elastomeres Bindemittel sowie eine Mischung aus einem fibrillierten organischen, synthetischen Polymer, organischen, synthetischen Polymerstapelfasern und organischen, synthetischen, löslichen Polymerpartikeln.

Aufgabe vorliegender Erfindung ist es, ein Reibelement bzw. Reibmaterial herzustellen, welches eine hohe Elastizität aufweist, um damit auch für den Einsatz für verschleißempfindliche

Gegenlamellen aus Leichtmetallen bzw. deren Legierungen eingesetzt werden zu können.

Diese Aufgabe der Erfindung wird durch die eingangs genannte Verwendung eines anionisch wirkenden Naphthalinsulfonsäure-Kondensationsproduktes als Schutzkolloid zur Herstellung eines Reibbelages aus einem Reibpapier gelöst, das mit einem Latex aus einem Elastomer versetzt wird und danach Fasern des Reibpapiers durch Ausfällung des Elastomers aus dem Latex miteinander verbunden werden, wobei das Naphthalinsulfonsäure-Kondensationsprodukt dem Latex vor dem Aufbringen auf das Reibpapier zugesetzt wird, durch den Reibbelag, der hergestellt ist mit einem Verfahren unter Verwendung eines anionisch wirkenden Naphthalinsulfonsäure-Kondensationsproduktes als Schutzkolloid und bei dem das Elastomer ein zwei- oder dreidimensionales Netzwerk bildet, sowie durch die Reibbaugruppe, welche den erfindungsgemäßen Reibbelag aufweist. Von Vorteil ist dabei, dass es durch die Verwendung eines Naphthalinsulfonsäure-Kondensationsproduktes als Schutzkolloids möglich ist, höhere Latexgehalte einzusetzen bzw. auf Reibpapiere aufzubringen, wobei der Latex eine stabile Verbindung mit der Oberfläche der Faserbestandteile des Reibpapieres einerseits und andererseits eine elastische Verbindung zwischen den einzelnen Fasern des Reibpapiers aufbaut. Es wird mit dem möglichen höheren Anteil an Latex im bzw. am Reibpapier ein zweidimensionales bzw. dreidimensionales Netzwerk aufgebaut, welches einerseits eine hohe Porosität ermöglicht, um das im Reibbelag gespeicherte Öl leicht wieder abgeben zu können bzw. auch bei schlechter Beölung gute Verschleißeigenschaften besitzt. Andererseits wird damit auch eine entsprechende Elastizität des Reibbelages erhalten, da der Latex nicht nur lose zwischen den einzelnen Fasern des Reibpapieres liegt, sondern die einzelnen Fasern miteinander verbindet und wird hiermit die Ölabgabe aus dem Reibbelag entsprechend unterstützt bzw. verbessert. Durch die Stabilisierung des Latex ist es möglich, diesen direkt auf die Oberfläche der einzelnen Phasen aufzutragen und erst danach die Dispersion bzw. Emulsion durch Verschiebung des pH-Wertes zu zerstören und damit die Ausfällung des Elastomers aus dem Latex einzuleiten bzw. zu bewirken. Es kann durch den höheren Latexgehalt bzw. Elastomergehalt im Reibbelag und die damit verbundene höhere Elastizität des Reibbelages der verschleißbedingte Ausfall dieser Baugruppen verringert bzw. vermindert werden, wodurch diese Reibbeläge, insbesondere diese Kupplungen bzw. verschleißempfindliche Reibbaugruppen mit Leichtmetallen bzw. Leichtmetalllegierungen, verwendbar sind.

Das Schutzkolloid ist ein anionisch wirkendes Naphthalinsulfonsäure-Kondensationsprodukt, da diese eine entsprechend gute Stabilisierung von wässrigen Latexdispersionen bzw. - emulsionen ermöglichen. Insbesondere werden als Naphthalinsulfonsäure-Kondensationsprodukte gemäß einer weiteren Ausführung der Erfindung, solche Kondensationsprodukte von Naphthalinsulfonsäure eingesetzt, die mit zumindest einer Verbindung ausgewählt aus einer Gruppe umfassend Formaldehyd und Alkane, insbesondere C1 bis C4, hergestellt werden. Diese Kondensationsprodukte haben sich im Rahmen der Erprobung der Erfindung als besonders geeignet erwiesen. Insbesondere können Natriumsalze von Naphthalinsulfonsäure-Formaldehyd-Kondensaten verwendet werden.

Bezogen werden können derartige Naphthalinsulfonsäure-Kondensationsprodukte beispielsweise bei der Fa. ACAT (Applied Chemicals Advanced Technologies).

Vorzugsweise wird das Naphthalinsulfonsäure-Kondensationsprodukt in einer Konzentration dem Latex zugesetzt, die ausgewählt ist aus einem Bereich mit einer unteren Grenze von 0,1 % und einer oberen Grenze von 10 %, bezogen auf den Latex. Unterhalb von 0,1 % wurde keine ausreichende Stabilisierung des Latex mehr beobachtet, insbesondere wenn dieser Latex einen höheren Anteil an dem Elastomer aufweist. Oberhalb von 10 % wurde eine Verschlechterung der Reaktionskinetik bei der nachfolgenden Ausfällung des Elastomers aus dem Latex beobachtet. Damit verbunden sind eine längere Produktionszeit bzw. Unregelmäßigkeiten im Reibbelag selbst. Insbesondere wurde bei einem zu hohen Anteil an dem Schutzkolloid beobachtet, dass die Porosität des Reibbelages deutliche Unregelmäßigkeiten aufweist, sodass dieses gegebenenfalls Stellen mit zu geringer Porosität aufweist.

Insbesondere wird das Naphthalinsulfonsäure-Kondensationsprodukt in einer Konzentration dem Latex zugesetzt, die ausgewählt ist aus einem Bereich mit einer unteren Grenze von 1 % und einer oberen Grenze von 8 %, vorzugsweise ausgewählt aus einem Bereich mit einer unteren Grenze von 3 % und einer oberen Grenze von 6 %, bezogen auf den Latex.

Der Latex weist bevorzugt einen Elastomergehalt von 40 Gew.-% bis 70 Gew.-% auf, sodass für höhere Elastomergehalte im Reibbelag geringe Mengen an Latex aufgetragen werden müssen, und die Ausfällung des Elastomers aus dem Latex vereinfacht ist und auch die Produktionszeit verkürzt werden kann.

Der Latexgehalt kann auch ausgewählt sein aus einem Bereich mit einer unteren Grenze von 45 Gew.-% und einer oberen Grenze von 65 Gew.-%, bzw. ausgewählt sein aus einem Bereich mit einer unteren Grenze von 50 Gew.-% und einer oberen Grenze von 55 Gew.-%.

Das Reibpapier kann mit einem Anteil an Latex versetzt werden, der ausgewählt ist aus einem Bereich mit einer unteren Grenze von 15 %, insbesondere 30 %, und einer oberen Grenze von 40 %, bezogen auf das Reibpapier mit dem Latex. Unterhalb von 15 % weist der Reibbelag nicht mehr die gewünschte Elastizität auf. Oberhalb von 40 % bewirkt eine weitere Erhöhung des Latex- bzw. Elastomeranteils eine Erhöhung des Verschleißes des Reibmaterials, sodass dieses vorzeitig ausfällt.

Vorzugsweise wird der Reibbelag auf einer Papiermaschine hergestellt, wodurch ein hoher Automatisierungsgrad und eine entsprechend günstige Herstellung ermöglicht werden.

Das Elastomer kann ausgewählt sein aus einer Gruppe umfassend SBR (Styrolbutadiengummi), NBR (Nitrilbutadiengummi), IR (Isoprengummi), NR (Naturgummi), ABS-Kautschuk (Acrylnitril-Butadien-Styren) sowie daraus hergestellte Verschnitte. Mit diesen Elastomeren wurde eine sehr gute Verschleißbeständigkeit des Reibbelages erreicht bei gleichzeitig hoher Elastizität.

Die Porosität des Reibbelages auf der Lamelle kann ausgewählt sein aus einem Bereich mit einer unteren Grenze von 35 % und einer oberen Grenze von 55 % der Volldichte, d.h. der Dichte des Vollmaterials, wodurch die Nasslauffähigkeit des Reibbelages verbessert wird, insbesondere die Ölspeicherkapazität dieses Reibbelages, und die Ölabgabe weiter verbessert werden können.

Die Porosität kann auch ausgewählt sein aus einem Bereich mit einer unteren Grenze von 40 % und einer oberen Grenze von 50 %.

Bevorzugt weist der Reibbelag einen Elastizitätsmodul auf, der ausgewählt ist aus einem Bereich mit einer unteren Grenze von 80 N/mm² und einer oberen Grenze von 160 N/mm², wodurch einerseits Gegenlamellen aus Leichtmetallen bzw. Leichtmetalllegierungen hinsichtlich ihres Verschleißes weiter geschont werden und andererseits der Reibbelag selbst eine ausreichend hohe Verschleißfestigkeit aufweist.

Der Elastizitätsmodul des Reibbelages kann auch ausgewählt sein aus einem Bereich mit einer unteren Grenze von 90 N/mm² und einer oberen Grenze von 140 N/mm².

Die Gegenlamelle der Reibbaugruppe weist insbesondere eine Härte nach Brinell (Prüflast 32,25 kg, Kugeldurchmesser 2,5 mm, Stahlkugel) auf, die ausgewählt ist aus einem Bereich mit einer unteren Grenze von HB 60 und einer oberen Grenze von HB 95, wodurch eine entsprechende Gewichtsreduktion dieser Reibbaugruppe ermöglicht wird und andererseits eine verbesserte Abstimmung hinsichtlich des Verschleißes des Reibbelages einerseits und der Gegenlamelle andererseits erreicht werden kann.

Zum besseren Verständnis der Erfindung wird diese anhand der nachfolgenden Beispiele sowie der Figur näher erläutert.

Es zeigt dabei in schematisch vereinfachter Darstellung:

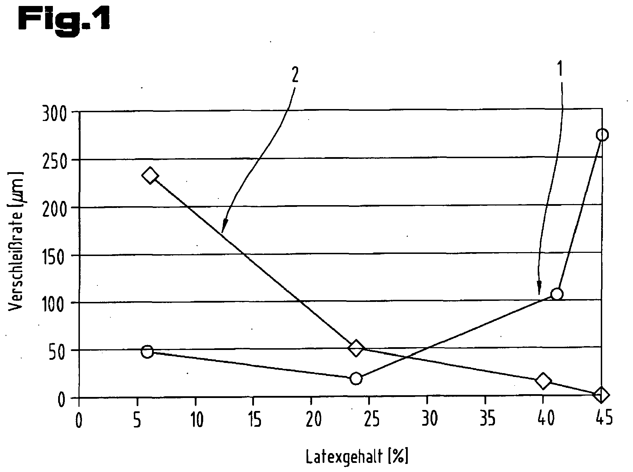

- Fig. 1: die Verschleißrate in Abhängigkeit des Latexgehaltes bei einem erfindungsgemäßen Reibbelag.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Einführend sei weiters festgehalten, dass im Sinne der Erfindung unter Latex definitionsgemäß eine kolloidale Dispersion oder Emulsion von einem Elastomer in einem wässrigen Medium verstanden wird.

Als Papier wird ein für derartige Reibbeläge übliches Papier verwendet, beispielsweise ein Papier mit einer Grammatur von 290 g/m². Dieses Papier wird üblicherweise auf einer Papiermaschine hergestellt und wird während des Herstellungsprozesses ein Latex aus einem Elastomer über ein Streichwerk auf das Papier aufgetragen. Der Anteil des Latex am Papier liegt im oben angegebenen Bereich. Es besteht auch die Möglichkeit, den Latex bereits der Faserpulpe zur Herstellung des Papiers zuzusetzen.

Gegebenenfalls können dem Latex bzw. der Gesamtmischung weitere Hilfsstoffe, wie z.B. Nassfestmittel, wie z.B. Polyamidharze bzw. Polyamidoamin-Epichlorhydrinharze, bzw. Füllstoffe oder aber auch Reibpartikel, wie z.B. SiO₂, zugesetzt sein. Der Latex weist vorzugsweise eine Viskosität zwischen 9 und 25 cps auf. Aufgrund dessen ist es dem Latex möglich, in die Fasermatrix des Papiers einzudringen, sodass also nicht nur eine oberflächliche Beschichtung des Latex im Papier vorhanden ist. Nach dem erfolgen Auftrag des Latex auf das Papier wird das Elastomer zur Ausfüllung gebracht, indem der pH-Wert in einem Bereich zwischen 4,0 bis 5,0 abgeändert wird. Dies erfolgt z.B. durch den Einsatz von Säuren.

Anstelle einer Papiermaschine kann die Herstellung der Reibbeläge auch beispielsweise manuell erfolgen, indem der Latex manuell auf das Papier aufgetragen wird.

Gegebenenfalls ist es auch möglich, anstelle des Streichens den Latex durch ein Sprühverfahren auf das Papier aufzutragen.

Im Rahmen der Erfindung wurde folgendes Ausführungsbeispiel durchgeführt.

Es wurde ein Papier mit der Grammatur von 300 g/m² verwendet. Auf dieses Papier wurde ein Latex folgender Zusammensetzung aufgebracht.
Elastomergehalt: 50 Gew.-%
Naphthalinsulfonsäure-Formaldehyd-Kondensat: 0,3 Gew.-% bis 0,5 Gew.-% (bezogen auf die Gesamtmischung)
Rest: Wasser

Dieser Latex wurde der Papierfaserpulpe zugesetzt und das Papier mit einer üblichen Papiermaschine hergestellt.

Nach dem Auftragen des Latex wurde der pH-Wert mit einer Säure, vorzugsweise Al₂(SO₄)₃, auf 4,5 abgesenkt, um die Elastomermoleküle bzw. das Elastomer zum Ausfällen zu bringen. Dadurch wurde ein dreidimensionales, spinnennetzartiges Netzwerk erzeugt, über das die einzelnen Fasern der Fasermatrix des Papiers miteinander "verklebt" wurden. Dieser Reibbelag hatte eine Porosität von 80 % (nicht auf der Lamelle).

Als Elastomer wurde ein ABS-Elastomer verwendet von der Firma Emerald Inc..

Dieser so hergestellte Reibbelag wurde in der Folge mit einem metallischen Träger verklebt. Als Metall wurde dabei eine Aluminium-Magnesium-Legierung (AlZn5,5 Mg Cu) verwendet.

Selbstverständlich ist es auch möglich, andere metallische Träger zu verwenden, beispielsweise andere Aluminiumlegierungen bzw. Aluminium an sich oder aber auch Stahl, etc.

Mit dem so hergestellten Reibelement wurde eine Motorradkupplung ausgestattet, wobei als Gegenlamelle ebenfalls eine Aluminium-Magnesium-Legierung (AlZn5,5MgCu) verwendet wurde, mit der Brinellhärte HB = 85.

In der Folge wurde von dieser Reibbaugruppe das Verschleißverhalten durch Bestimmung der Verschleißrate mittels Dickendifferenzmessung nach dem jeweiligen Verschleiß bestimmt. Es wurde dabei der Verschleißrate sowohl des Reibbelages an sich, d.h. der Reibbelagslammelle, als auch der Aluminiumgegenlamelle bestimmt und ist das Ergebnis in der Fig. 1 dargestellt. Es ist dabei auf der Ordinate die Verschleißrate in µm aufgetragen und auf der Abszisse der Latexgehalt in %.

Der Kurvenverlauf 1 in Fig. 1 kennzeichnet dabei die Verschleißrate der Reibbelagslamelle und der Kurvenverlauf 2 jene der Aluminiumgegenlamelle.

Es wurden für die Erstellung der Fig. 1 verschiedenste Latexgehälter, d.h. Reibbeläge aus Papier mit verschiedenen Latexanteilen hinsichtlich ihres Verschleißverhaltens erprobt. Wie aus der Figur ersichtlich ist, wurde mit 5 %, 24 % und 40 % Latexanteil getestet.

Wie aus dieser Figur deutlich ersichtlich ist, sinkt die Verschleißrate der Aluminiumgegenlamelle mit höherem Anteil an Latex im Reibbelag, wobei umgekehrt hierzu die Verschleißrate der Reibbelagslamelle mit zunehmendem Latexgehalt im Reibpapier deutlich steigt. Ein optimaler Wert dieser Reibbaugruppe hinsichtlich des Verschleißverhaltens wurde insbesondere im Bereich von 20 und 30 % Latex bzw. Elastomer im Reibbelag beobachtet, wobei im Hinblick auf die Schonung der Gegenlamelle aus Aluminium Anteile an Elastomer im Reibbelag bis 40 %, insbesondere zwischen 30 und 40 %, ausführbar sind und ist deutlich ersichtlich, dass bei einem Latexgehalt oberhalb von 40 %, beispielsweise bei 45 %, die Verschleißrate der Reibbelagslamelle überproportional steigt und somit Gehalte an Latex bzw. Elastomer über 40 % nicht mehr praktikabel sind, da die Reibbelagslamelle zu schnell verschleißt.

Diese Tests wurden auch mit anderen Latices, nämlich SBR, IR und NR wiederholt und zeigt sich im Wesentlichen der selbe Kurvenverlauf bzw. konnte beobachtet werden, dass im Hinblick auf die gesamte Reibbaugruppe ein Elastomeranteil im Reibpapier zwischen 30 und 40 % optimal ist.

## Patentansprüche

1. Verwendung eines anionisch wirkenden Naphthalinsulfonsäure-Kondensationsproduktes als Schutzkolloid zur Herstellung eines Reibbelages aus einem Reibpapier das mit einem Latex aus einem Elastomer versetzt wird und danach Fasern des Reibpapiers durch Ausfällung des Elastomers aus dem Latex miteinander verbunden werden, wobei das Naphthalinsulfonsäure-Kondensationsprodukt dem Latex vor dem Aufbringen auf das Reibpapier zugesetzt wird.

2. Verwendung nach Anspruch 1, **dadurch gekennzeichnet, dass** als Naphthalinsulfonsäure-Kondensationsprodukt ein Kondensationsprodukt von Naphthalinsulfonsäure mit zumindest einer Verbindung ausgewählt aus einer Gruppe umfassend Formaldehyd und Alkane verwendet wird.

3. Verwendung nach Anspruch 1 oder 2 **dadurch gekennzeichnet, dass** das Naphthalinsulfonsäure-Kondensationsprodukt in einer Konzentration dem Latex zugesetzt wird, die ausgewählt ist aus einem Bereich mit einer unteren Grenze von 0,1 Gew.- % und einer oberen Grenze von 10 Gew.-%, bezogen auf den Latex.

4. Verwendung nach einem der vorhergehenden Ansprüche, **dadurch gekennzeichnet, dass** der Latex einen Elastomergehalt aufweist, ausgewählt aus einem Bereich mit einer unteren Grenze von 40 Gew.-% und einer oberen Grenze von 70 Gew.-%.

5. Verwendung nach einem der vorhergehenden Ansprüche, **dadurch gekennzeichnet, dass** das Reibpapier mit einem Anteil an Latex versetzt wird, der ausgewählt ist aus einem Bereich mit einer unteren Grenze von 15 Gew.-%, insbesondere 30 Gew.-%, und einer oberen Grenze von 40 Gew.-%, bezogen auf das Reibpapier mit dem Latex.

6. Verwendung nach einem der vorhergehenden Ansprüche, **dadurch gekennzeichnet, dass** der Reibbelag auf einer Papiermaschine hergestellt wird.

7. Reibbelag, insbesondere Nasslaufreibbelag, umfassend zumindest ein Reibpapier mit Fasern, die mit zumindest einem Elastomer gebunden sind, **dadurch gekennzeichnet, dass** der Reibbelag hergestellt ist mit einem Verfahren unter Verwendung eines anionisch wirkenden Naphthalinsulfonsäure-Kondensationsproduktes als Schutzkolloid nach einem der vorhergehenden Ansprüche, und dass das Elastomer ein zwei- oder dreidimensionales Netzwerk bildet.

8. Reibbelag nach Anspruch 7, **dadurch gekennzeichnet, dass** ein Anteil des Elastomers ausgewählt ist aus einem Bereich mit einer unteren Grenze von 30 Gew.-% und einer oberen Grenze von 40 Gew.-%.

9. Reibbelag nach Anspruch 7 oder 8, **dadurch gekennzeichnet, dass** das Elastomer ausgewählt ist aus einer Gruppe umfassend SBR, NBR, IR, NR, ABS, sowie daraus hergestellte Verschnitte.

10. Reibbelag nach einem der Ansprüche 7 bis 9, **dadurch gekennzeichnet, dass** dieser eine Porosität aufweist, die ausgewählt ist aus einem Bereich mit einer unteren Grenze von 35 % und einer oberen Grenze von 55 %.

11. Reibbelag nach einem der Ansprüche 7 bis 10, **dadurch gekennzeichnet, dass** dieser einen Elastizitätsmodul aufweist, der ausgewählt ist aus einem Bereich mit einer unteren Grenze von 80 N/mm² und einer oberen Grenze von 160 N/mm².

12. Reibbaugruppe, insbesondere Motorradkupplung, umfassend einen Reibbelag auf einem Träger und eine Gegenlamelle, die mit dem Reibbelag zusammenwirkt, **dadurch gekennzeichnet, dass** der Reibbelag nach einem der Ansprüche 7 bis 11 ausgebildet ist.

13. Reibbaugruppe nach Anspruch 12, **dadurch gekennzeichnet, dass** die Gegenlamelle aus einem Leichmetall oder einer Leichtmetalllegierung gebildet ist.

14. Reibbaugruppe nach Anspruch 12 oder 13, **dadurch gekennzeichnet, dass** die Gegenlamelle eine Brinellhärte aufweist, die ausgewählt ist aus einem Bereich mit einer unteren Grenze HB 60 und einer oberen Grenze von HB 95.

## Claims

1. Use of an anionically acting naphthalene sulphonic acid condensation product as the protective colloid in manufacturing a friction lining from a friction paper which is displaced with a latex based on an elastomer and fibres of the friction paper are then bonded with each other by precipitation of the elastomer out of the latex, wherein the naphthalene sulphonic acid condensation product is added to the latex before its application to the friction paper.

2. Use according to claim 1, **characterized in that** a condensation product of naphthalene sulphonic acid with at least one compound selected from a group comprising formaldehyde and alkanes is used as the naphthalene sulphonic acid condensation product.

3. Use according to claim 1 or 2, **characterized in that** the naphthalene sulphonic acid condensation product is added to the latex in a concentration selected from a range having a lower limit of 0.1 wt% and an upper limit of 10 wt% relative to the latex.

4. Use according to any one of the preceding claims, **characterized in that** the latex has an elastomer content selected from a range having a lower limit of 40 wt% and an upper limit of 70 wt%.

5. Use according to any one of the preceding claims, **characterized in that** the friction paper is displaced with a proportion of latex selected from a range having a lower limit of 15 wt%, in particular 30 wt%, and an upper limit of 40 wt% relative to the friction paper with the latex.

6. Use according to any one of the preceding claims, **characterized in that** the friction lining is manufactured on a paper machine.

7. Friction lining, in particular a friction lining for wet operation, comprising at least one friction paper with fibres which are bonded with at least one elastomer, **characterized in that** the friction lining is manufactured by a method using an anionically acting naphthalene sulphonic acid condensation product as the protective colloid according to any one of the preceding claims, and that the elastomer forms a two-dimensional or three-dimensional network.

8. Friction lining according to claim 7, **characterized in that** a proportion of the elastomer is selected from a range having a lower limit of 30 wt% and an upper limit of 40 wt%.

9. Friction lining according to claim 7 or 8, **characterized in that** the elastomer is selected from a group comprising SBR, NBR, IR, NR, ABS, and blends produced therefrom.

10. Friction lining according to any one of claims 7 to 9, **characterized in that** it has a porosity selected from a range having a lower limit of 35 % and an upper limit of 55 %.

11. Friction lining according to any one of claims 7 to 10, **characterized in that** it has a modulus of elasticity selected from a range having a lower limit of 80 N/mm² and an upper limit of 160 N/mm².

12. Friction unit, in particular a motorcycle clutch, comprising a friction lining on a support and a counterplate which co-operates with the friction lining, **characterized in that** the friction lining is embodied according to any one of claims 7 to 11.

13. Friction unit according to claim 12, **characterized in that** the counterplate is made from a light metal or a light metal alloy.

14. Friction unit according to claim 12 or 13, **characterized in that** the counterplate has a Brinell hardness selected from a range having a lower limit of HB 60 and an upper limit of HB 95.

## Revendications

1. Utilisation d'un produit de condensation d'acide naphtalènesulfonique à action anionique en tant que colloïde protecteur pour la fabrication d'une garniture de friction à partir d'un papier de friction additionné d'un latex constitué d'un élastomère, des fibres du papier de friction étant ensuite reliées les unes aux autres par précipitation de l'élastomère à partir du latex, le produit de condensation d'acide naphtalènesulfonique étant ajouté au latex avant application sur le papier de friction.

2. Utilisation selon la revendication 1, **caractérisée en ce qu'**on utilise en tant que produit de condensation d'acide naphtalènesulfonique un produit de condensation d'acide naphtalènesulfonique et d'au moins un composé choisi dans un groupe comprenant le formaldéhyde et les alcanes.

3. Utilisation selon la revendication 1 ou 2, **caractérisée en ce que** le produit de condensation d'acide naphtalènesulfonique est ajouté au latex à une concentration qui est choisie dans la plage présentant une limite inférieure de 0,1 % en poids et une limite supérieure de 10 % en poids, par rapport au latex.

4. Utilisation selon l'une des revendications précédentes, **caractérisée en ce que** le latex présente une teneur en élastomère choisie dans la plage présentant une limite inférieure de 40 % en poids et une limite supérieure de 70 % en poids.

5. Utilisation selon l'une des revendications précédentes, **caractérisée en ce qu'**on ajoute au papier de friction une proportion de latex choisie dans la plage présentant une limite inférieure de 15 % en poids, en particulier de 30 % en poids, et une limite supérieure de 40 % en poids, par rapport au papier de friction comprenant le latex.

6. Utilisation selon l'une des revendications précédentes, **caractérisée en ce que** la garniture de friction est fabriquée sur une machine à papier.

7. Garniture de friction, en particulier garniture de friction à frottement humide, comportant au moins un papier de friction comprenant des fibres qui sont reliées au moins à un élastomère, **caractérisée en ce que** la garniture de friction est fabriquée par un procédé utilisant un produit de condensation d'acide naphtalènesulfonique à action anionique en tant que colloïde protecteur selon l'une des revendications précédentes, et **en ce que** l'élastomère forme un réseau bi- ou tridimensionnel.

8. Garniture de friction selon la revendication 7, **caractérisée en ce que** la proportion de l'élastomère est choisie dans la plage présentant une limite inférieure de 30 % en poids et une limite supérieure de 40 % en poids.

9. Garniture de friction selon la revendication 7 ou 8, **caractérisée en ce que** l'élastomère est choisi dans le groupe comprenant le SBR, le NBR, l'IR, le NR, l'ABS, ainsi que les mélanges fabriqués à partir de ceux-ci.

10. Garniture de friction selon l'une des revendications 7 à 9, **caractérisée en ce qu'**elle présente une porosité choisie dans la plage présentant une limite inférieure de 35 % et une limite supérieure de 55 %.

11. Garniture de friction selon l'une des revendications 7 à 10, **caractérisée en ce qu'**elle présente un module d'élasticité qui est choisi dans la plage présentant une limite inférieure de 80 N/mm² et une limite supérieure de 160 N/mm².

12. Sous-ensemble de friction, en particulier embrayage pour motocyclette, comprenant une garniture de friction sur un support et une contre-lamelle, qui coopère avec la garniture de friction, **caractérisé en ce que** la garniture de friction est constituée selon l'une des revendications 7 à 11.

13. Sous-ensemble de friction selon la revendication 12, **caractérisé en ce que** la contre-lamelle est formée d'un métal léger ou d'un alliage d'un métal léger.

14. Sous-ensemble de friction selon la revendication 12 ou 13, **caractérisé en ce que** la contre-lamelle présente une dureté Brinell qui est choisie dans la plage présentant une limite inférieure HB 60 et une limite supérieure HB 95.
